# EUROPEAN PATENT SPECIFICATION

(11) **EP 3 332 975 B1**
(45) Date of publication and mention of the grant of the patent: **08.12.2021**
(21) Application number: 16203420.1
(22) Date of filing: 12.12.2016
(51) Int. Cl.: B41J 3/407, B29C 67/00, B29D 11/00

(54) **PRINTING SYSTEM AND METHOD FOR PRINTING A THREE-DIMENSIONAL OPTICAL STRUCTURE, PROVIDING REAL-TIME QUALITY CONTROL OF THE PRINTED OPTICAL STRUCTURE**
DRUCKSYSTEM UND VERFAHREN ZUM DRUCKEN EINER DREIDIMENSIONALEN OPTISCHEN STRUKTUR, BEREITSTELLUNG VON ECHTZEITQUALITÄTSKONTROLLE DER GEDRUCKTEN OPTISCHEN STRUKTUR
SYSTÈME D'IMPRESSION ET PROCÉDÉ D'IMPRESSION D'UNE STRUCTURE OPTIQUE TRIDIMENSIONNELLE FOURNISSANT UN CONTRÔLE DE QUALITÉ EN DURÉE RÉELLE DE LA STRUCTURE OPTIQUE IMPRIMÉE

(43) Date of publication of application: 13.06.2018
(73) Proprietor: Luxexcel Holding B.V., 5656 AE Eindhoven (NL)
(72) Inventor: BISKOP, Joris, 4381 BK Vlissingen (NL); GROET, Guido, 2360 Oud-Turnhout (BE); VAN DEN HEUVEL, Kevin-Koos, 4463 TX Goes (NL)
(74) Representative: Loock, Jan Pieter

(56) References cited:
- EP-A1- 1 278 091
- EP-A1- 2 474 404
- CA-A- 803 168
- US-A1- 2015 093 544
- US-A1- 2015 093 552

## Description

### BACKGROUND

The present invention relates to a printing system for printing a three-dimensional optical component, comprising a printing unit comprising a print head with ejection nozzles for ejecting droplets of printing ink, comprising a measurement unit to measure optical properties of a pre-structure of the three-dimensional optical component.

It is common knowledge that products provided with optical structures can be manufactured in a comparably time-saving and inexpensive way by printing the optical structures directly on an appropriate substrate by using droplet-on-demand (DOD) inkjet printing technologies. Suchlike imprinted optical structures comprise lenses, in particular ophthalmic lenses, mirrors or retroreflectors, for instance. The substrate can be made of synthetic material or glass. Furthermore, curing the imprinted material by using light irradiation for reducing the overall printing time is a well-known technique. For example, prior art documents EP 2 631 686 A1, EP 2 636 531 A1, EP 2 846 982 A1, EP 2 846 983 A1 and EP 2 846 984 A1 explain in detail how suchlike printing processes can be implemented.

High-quality optical structures are defined as optical structures whose optical properties do exactly coincide with predefined optical properties. Predefined optical properties are the optical properties the optical structure has exhibit in order to serve its purpose. Predefined optical properties define the target to reach during the production of the optical structure and are therefore in the following also referred to as target optical properties.

Optical properties of an optical structure in the sense of the present invention are all properties of the optical structure that determine the interaction of the optical structure with light. Optical properties comprise, but are not limited to refraction properties, reflection properties, diffraction properties, dispersion properties, transmission properties, adsorption properties and scattering properties. Geometrical properties of an optical structure, even though the boundary of the optical structure does determine the interaction of the optical structure with light, are not an optical properties in the sense of the present invention.

Whereas printing of optical structures has proven a comparably time-saving and inexpensive way to produce optical structures, errors and irregularities in the printing process still do occur which lead to deviations of the actual properties from the target optical properties, compromising the quality of the printed optical structures. Deviations of the actual optical properties from the predefined optical properties arise, for example, through
1. deviations of the actual geometry of the pre-structure from the target geometry during at least one printing step, e.g. caused by clogged ejection nozzles during at least one depositing step,
2. deviations of the actual surface flow of the pre-structure from the target surface flow during at least one printing step resulting, e.g. caused by irregularities during the depositing step
3. contaminations of the pre-structure, e.g. with foreign particles and impurities, during at least one printing step
4. entrapments in the pre-structure, e.g. of air,
5. local or global (with respect to the pre-structure) deviations of the actual refraction index of the pre-structure from the predefined refraction index, e.g. caused by errors and irregularities during the curing step.

Even the slightest of each of these deviations by itself can result in significant optical errors. Over the repeated printing steps these errors combine and sum up.

It is therefore beneficial to detect these deviations as early as possible during the printing process. Preferably, the deviations are being detected immediately after they have been generated.

For this purpose, prior art document EP 2 474 404 A1 discloses a print head for printing optical structures on a substrate by use of an ejection device for ejecting droplets of printing ink towards a substrate additionally comprising a measuring unit for contactless measurement of physical parameters of at least one deposited droplet, wherein the physical parameter can be a geometrical parameter or an optical parameter. The aim of this approach is to identify potential irregularities in the pre-structure and to compensate any measured imperfections in the shape of the optical structure by adjusting the ejection direction and ejecting further droplets onto the still incorrect optical structure.

Even though prior art document EP 2 474 404 A1 also mentions the possibility of measuring an optical parameter, the document focusses on the measurement of geometrical parameters and on the measures that can be performed to compensate the irregularities detected through the measurement of geometrical parameters. As to the measurement of optical parameters, prior art document EP 2 474 404 A1 mentions grade of transmission, grade of reflection and/or coloring of the deposited droplet and/or a layer of multiple deposited droplets. A technical realization or method describing how these optical parameters can be measured is not subject of the invention disclosed in prior art document EP 2 474 404 A1.

On the other hand, differences between actual geometry and target geometry, are only one of the many causes for differences between the actual optical properties and the predefined optical properties of the pre-structure.

It is very likely that the actual optical properties of the pre-structure differ from the target optical properties of the pre-structure if the actual geometry of the pre-structure does not coincide with the target geometry of the pre-structure. However, this is not necessarily the case, e.g. such deviations might accidentally be compensated for by irregularities in the refractive index of the pre-structure. Moreover, the measurement accuracy and thus the threshold at which deviations are detected in the geometry and/or surface flow does not coincide with the threshold at which deviations in geometry and/or surface flow cause deviations in the optical properties. For example, the measurement of the geometrical properties might be too sensitive. This results in the unnecessary detection and thus unnecessary compensation of deviations, increasing production time and costs. On the other hand, deviations of the geometry that cause deviations in optical properties may be below measurement accuracy of the geometry measurement, respectively.

Moreover, the actual optical properties of the pre-structure may differ from the target optical properties of the pre-structure even if the actual geometry of the pre-structure does coincide with the target geometry of the pre-structure. Examples are given in the following:
Measuring the geometry after each depositing step is very time consuming. Therefore, the measurement of geometry and surface flow might be repeated only, e.g., every second, third or fourth step. As a consequence, undetected depressions in the surface of the pre-structure (that are not part of the optical design of the pre-structure) arising during a depositing step after which no measurement is performed, can form entrapments that are undetectable during the following measurement steps through a measurement of geometrical properties as e.g. disclosed in EP 2 474 404 A1.

Moreover, impurities in the printed structure arise, e.g., through contamination with foreign particles of at least one droplet ejected from the ejection nozzles. Depending on the size and form of the contamination, these impurities do not lead to a deviation in geometry and/or surface flow from the target geometry, respectively. The measurement of geometrical properties as disclosed in EP 2 474 404 A1 is therefore unsuitable for the detection of impurities.

During the printing process, the optical structure is at least once exposed to UV light in order to cure or to partially cure the deposited droplets. Exposure to UV light alters the refraction index of the deposited droplets. Irregularities in the curing step therefore result in deviations of the actual optical properties from the target optical properties. These deviations are not caused by deviations in geometry and therefore are not detectable with the measurement of geometrical properties as disclosed in EP 2 474 404 A1.

It is therefore obvious that prior art document EP 2 474 404 A1 is insufficient in that the disclosed method in effect is limited to the measurement of geometrical properties. The decisive properties determining the quality and fitness for purpose of an optical component are, however, its optical properties. These are impaired not only by deviations in geometry, but, amongst others, also by contaminations, entrapments and local and global deviations of the refractive index. Measurement of the geometry of the pre-structure is insufficient to ensure high quality in printed optical structures.

### SUMMARY

It is therefore an object of the present invention to provide a printing system for printing three-dimensional optical structures and a method for printing optical structures providing the printing of optical structures of reliable, reproducible and verifiable high quality.

The object of the present invention is achieved by a printing system for printing a three-dimensional optical component, comprising a printing unit comprising a print head with ejection nozzles for ejecting droplets of printing ink, comprising a measurement unit to measure optical properties of a pre-structure of the three-dimensional optical component characterized in that the measurement unit comprises at least one light source and at least one light detector, further comprising a process control unit for determining the difference between the measured optical properties of the pre-structure and target optical properties of the pre-structure.

According to the present invention, it is thereby advantageously possible to provide a printing system which enables verification of the optical properties of the formed optical structure by measuring at least one optical parameter. Consequently, a feedback can be generated in time by the process control unit which is based on the actual optical conditions of the pre-structure built up during the preceding printing steps. Potential deviations from the target optical properties are being identified by the process control unit in real-time and if necessary can be rectified in further printing and/or curing steps. In this way, all potential environmental disturbances are automatically taken into account. Furthermore, a real-time control of the printing process is possible which reduces the number of rejections and the involved costs.

According to the present invention, target optical properties of the pre-structure are the optical properties the pre-structure has to exhibit in order that the resulting printed optical structure exhibits predefined optical properties.

According to the present invention, a measurement unit is part of the printing system. It is herewith advantageously possible to measure optical properties of the pre-structure without removing the pre-structure from the printing system. Thus, contaminations and/or deformations of the pre-structure which otherwise may arise during the removal of the pre-structure from the printing system, especially if removal happens before a final curing has taken place, are avoided. Preferably, the measurement unit is placed in such a way inside the printing system that the pre-structure does not have to be moved at all during the printing process as a result of measurements being carried out. The measurement unit is preferably movable relative to the pre-structure. It is preferred that the measurement unit can be adjusted in such a way that optical properties of at least one deposited droplet or optical properties of only parts of the pre-structure or optical properties of the entire pre-structure can be measured during at least one measuring step. It is conceivable that the measurement accuracy of the measurement unit is adjustable. Herewith, it is advantageously possible to optimize the trade-off between measurement accuracy on the one hand and measurement time and measurement effort on the other hand.

According to the present invention, the process control unit is part of the printing system. It is herewith advantageously possible to compare the measured, actual optical properties of the pre-structure with the target optical properties of the pre-structure and to detect any deviations of the optical properties of the pre-structure from the target optical properties. Preferably, the process control unit is integrated into the print head. In another preferred embodiment of the present invention, the process control unit is not integrated into the print head, but forms a separate unit that is connected at least to the print head in a wired and/or wireless way. It is conceivable that the process control unit is connected to an external computer in a wired and/or wireless way. It is herewith advantageously possible to provide the process control unit with target optical properties that are calculated in real time at least depending on the actual optical properties measured during the measurement step preceding the last measurement step. It is conceivable that additionally information on the actual geometry measured during at least one of the measurement step before the last measurement step is also taken into account in the calculation of the target optical properties.

Optical structures in the sense of the present invention in particular comprise ophthalmic lenses, micro lenses, Fresnel structures, optical prisms and the like, which are made of multiple droplets of printing ink deposited by the print head. The printing ink comprises preferably transparent or trans-lucent printing ink. Preferably, the printing ink comprises an UV curable liquid monomer becoming a polymer if being cured. Preferably, the droplets are deposited onto a substrate. The substrate can be a part of the printed structure or a support plate for supporting the deposited droplets only during the printing process or the substrate can be part of the measurement unit.

The print head is preferably movable relative to the deposited droplets in a moving step. It is conceivable that the print head is moved relative to the deposited droplets in a moving step performed between two subsequent depositing steps. Movement of the print head relative to the deposited droplets is preferably obtained by actively driving the print head, while the substrate on which the droplets are deposited preferably stands still, or by moving the substrate on which the droplets are deposited, while the print head preferably stands still. It is also conceivable that both the print head as well as the substrate are moved actively. However, the wording "moving the print head relative to the deposited droplets" in the sense of the present invention does not necessarily mean that the print head is actually moved, because alternatively the substrate on which the droplets are deposited can e.g. solely be moved to obtain the relative movement between the print head and the deposited droplets. This can be done also in any of the following preferred embodiments. The printing data are provided to the printer be means of an intensity image. The intensity image preferably comprises a two-dimensional pattern of different grey or colour intensities. The pattern consists of different pixels, wherein each pixel represents a certain position in the three-dimensional structure to be printed. In particular, each pixel represents a certain position of a two-dimensional projection of the three-dimensional structure onto a flat base plane. The distribution of the intensity in the intensity image represents the shape of the three-dimensional structure to be printed as the intensity in each pixel is a value for the height of the three-dimensional structure at the corresponding position. The height of the printed three-dimensional structure in a certain position depends on the number/size of droplets of printing ink and accordingly to the amount of printing material deposited in this position. The print head deposits printing ink in dependency of the intensity image, so that a three-dimensional structure is printed having the shape of the software based-virtual design given by the intensity image.

As known from the prior art, the deposited droplets are at least partly cured after each depositing step in a curing step. The printing ink of the deposited droplets is either fully cured after each depositing step or only partly cured. In the second case, a final curing step is performed after finishing the three-dimensional optical structure.

The measurement unit in the sense of the present invention comprises at least one light source emitting visible light, further comprising at least one detector measuring the properties of the emitted light after it has been in contact with the pre-structure. 'To be in contact with' an optical structure in the sense of the present invention means 'to have passed through' and/or 'to have been reflected from' the optical structure.

It is conceivable that the at least one light source and the at least one detector are located on opposite sides of the pre-structure. Namely, the detector is located below the pre-structure if the light source is located above the pre-structure and the detector is located above the pre-structure if the light source is located below the pre-structure. In the sense of the present invention, 'above' and 'below' are defined by the direction of flight of the deposited droplets. More precisely, the droplets move from 'above' to 'below'. It is also conceivable that the at least one light source and the at least one detector are located on the same side of the pre-structure. Namely, it is conceivable that the at least one light source and the at least one detector are both located above the pre-structure or that the at least one light source and the at least one detector are both located below the pre-structure.

It is conceivable that the at least one light source and the at least one detector are located on opposite sides of the substrate. Namely, the detector is located below the substrate if the light source is located above the substrate and the detector is located above the substrate if the light source is located below the substrate. It is also conceivable that the at least one light source and the at least one detector are located on the same side of the substrate. Namely, it is conceivable that the at least one light source and the at least one detector are both located above the substrate or that the at least one light source and the at least one detector are both located below the substrate.

It is conceivable that the measurement unit comprises at least one optical element, such as, but not limited to, a mirror and/or an optical lens. Preferably, at least one optical element is used to change the properties of the light emitted from the at least one light source before and/or after having been in contact with the pre-structure in a well-defined way. It is herewith advantageously possible to, e.g. deflect and/or redirect and/or focus and/or widen the light emitted from the at least one light source before and/or after having been in contact with the pre-structure using at least one optical element. It is also conceivable that at least one optical element is used to bring the light emitted from the at least one light source to interference with itself before and/or after the light from the at least one light source has been in contact with the pre-structure. Preferably, the measurement unit comprises at least a first and a second light source. It is conceivable that the light emitted by the first light source is brought to interference with the light emitted by the second light source through at least one optical element before and/or after the light emitted by at least one of the light sources has been in contact with the pre-structure.It is conceivable that the measurement unit comprises at least one shielding screen to block off at least part of the light emitted from the at least one light source before and/or after having been in contact with the pre-structure. Through the at least one shielding screen it is preferably possible to prevent scattered light from reaching the at least one detector. It is conceivable that a pattern is cut out from the shielding screen, providing a mask for the light emitted from the at least one light source before and/or after having been in contact with the pre-structure. This mask can, e.g., be used to collimate the light source.

According to a preferred embodiment of the present invention, the measurement unit comprises a shadowgraph and the measured optical properties of the pre-structure are recorded as an actual shadowgram.

A shadowgraph in the sense of the present invention comprises at least detector, preferably an imaging screen, and at least one light source. The shadowgraph method detects variation in refractive index arising from density variations in the pre-structure. Effectively, the second spatial derivative of the refractive index is detected with the shadowgraph method. Preferably, the at least one imaging screen is a piece of photosensitized and/or retroflective material. Preferably, the at least one imaging screen is trans-lucent or, alternatively, the imaging screen is not trans-lucent. Preferably, the at least one light source is a point source or the at least one light source is not a point source. It is conceivable that the at least one light source is monochromatic or that the wavelength of the at least one light source can be tuned.

It is conceivable that the at least one light source can be collimated, e.g. through a shielding screen. It is herewith advantageously possible to increase the luminous efficiency of the shadowgraph and/or to increase the evenness of illumination of the at least one imaging screen. The at least one light source and the at least one imaging screen are placed in such a way in the printing system that the light from the at least one light source passes through the pre-structure before hitting the at least one imaging screen. Preferably, the distance between pre-structure and the at least one imaging screen and/or the distance between pre-structure and the at least one light source can be varied during the measurement and/or between measurements. It is herewith advantageously possible to optimize sharpness and sensitivity of the shadowgraph.

A shadowgram in the sense of the present invention is the luminance or brightness distribution measured on the imaging screen during the shadowgraph measurement. Preferably, the shadowgram is directly measured and/or recorded by the screen. Alternatively, the shadowgram is measured and/or recorded by at least one camera where the at least one camera is placed on the same side of the imaging screen as the pre-structure or the at least one camera is placed on the opposite side of the imaging screen as the pre-structure. It is conceivable that the shadowgraph is comprised of several shadowgraph systems, e.g. placed at different angles with respect to the pre-structure.

According to the present invention, the measurement unit is a schlieren measurement unit and the measured optical properties of the pre-structure are recorded as an actual schlieren image.

A schlieren measurement unit in the sense of the present invention comprises at least one light source, comprises at least one imaging screen, comprises at least a first optical element and a second optical element and further comprises at least one obstructing screen, called the knife edge.

The schlieren method detects variation in refractive index due to density variations in the pre-structure. Effectively, the transverse derivative of the refractive index is detected with the schlieren method.

Preferably, the first optical element is an optical lens, called the field lens. Alternatively, the first optical element is a mirror, called the field mirror. Preferably the field mirror is a high-quality concave first-surface mirror. The use of a field mirror advantageously avoids chromatic aberration that occurs in schlieren measurements with a field lens, resulting in colored images on the imaging screen. It is conceivable that the measurement unit comprises a second field mirror. Field lens and/or field mirror can also be referred to as schlieren head.

Preferably, the second optical element is an optical lens, called the camera lens.

Preferably, the at least one imaging screen is a piece of photosensitized and/or retroflective material. Preferably, the at least one imaging screen is trans-lucent or, alternatively, the screen is not trans-lucent. Preferably, the at least one light source is a point source or the at least one light source is not a point source. It is conceivable that the at least one light source is monochromatic or that the wavelength of the at least one light source can be tuned.

The obstructing screen, also referred to as knife edge, is preferably opaque. In an alternative embodiment of the present invention, the obstructing screen is a transparent, colored filter. The filter can be monochromatic or be of mixed colors. In a preferred embodiment of the present invention, the filter can be divided in zones that differ in color from each other. The edges between the differently colored zones of the colored filter can be soft edges or sharp edges.

In a preferred embodiment of the present invention, the at least one light source, the at least one imaging screen, the schlieren head, the knife edge and the camera lens are placed in such a way that the light emitted by the at least one light source first passes through the schlieren head, secondly passes the pre-structure, thirdly passes the camera lens, fourthly passes the knife edge and lastly hits the imaging screen. Preferably, the knife edge is inserted in the focal plane of the schlieren head, called the schlieren stop or schlieren plane.

In a preferred embodiment of the present invention, the distance between pre-structure and knife edge can be varied. It is herewith advantageously possible to vary the sensitivity of the schlieren measurement.

According to another preferred embodiment of the present invention, the printing system comprises at least one UV-light source that emits UV light of differing intensity and/or with differing exposure time and/or wavelength at at least two different points on the pre-structure resulting in a spatially varying exposure of the pre-structure to UV light.

In order to build up the optical structure, the droplets pf printing ink have to be deposited side by side and one above the other, preferably partly overlapping each other, so that the pre-structure forms a three-dimensional structure which optically influences light passing the optical structure and/or the substrate. The optical properties of the at least one deposited droplet can be changed by exposing the at least one deposited droplet to ultraviolet (UV) light. Exposure time, wavelength and intensity influence the optical properties of the at least one deposited droplet. It is conceivable to use UV light to compensate deviations of the actual optical properties of the pre-structure from the target optical properties by adapting the exposure time, wavelength and/or intensity of the UV light depending on the measured difference between actual optical properties and target optical properties of the pre-structure.

In a preferred embodiment of the present invention, exposure time, wavelength and/or intensity of the UV light used as curing device are adapted depending on the measured difference between actual optical properties and target optical properties of the pre-structure. The curing device is particularly configured for curing the at least one deposited droplet and/or the pre-structure depending on the measured optical parameters. For example, if a desired shape of the pre-structure is obtained, the curing device is enabled to final harden the pre-structure. Alternatively, if the measurement shows that the optical properties of the pre-structure deviate from the target optical properties, the deposited droplets get only partially hardened, so that further droplets can be deposited merging with the partially hardened droplets in order to achieve the target optical properties.

Alternatively, the printing system comprises at least one UV light that is not used as curing device and the exposure time, wavelength and/or intensity of which are adapted depending on the measured difference between actual optical properties and target optical properties of the pre-structure.

It is conceivable that the at least one UV light source is integrated into the print head.

In a preferred embodiment of the present invention, exposure time, wavelength and/or intensity of at least a first and a second UV light are adapted depending on the measured difference between actual optical properties and target optical properties of the pre-structure where the exposure time, wavelength and/or intensity of the first UV light differs from the exposure time, wavelength and/or intensity of the second UV light, respectively. Preferably, the print head comprises at least a first and a second ejection device, wherein the first ejection device is capable of ejecting at least one droplet of a second printing ink, wherein the first printing ink is curable by UV light of the exposure time, wavelength and/or intensity of the first UV light and wherein the second printing ink is curable by UV light of the exposure time, wavelength and/or intensity of the second UV light. It is hereby advantageously possible to efficiently rectify incorrect optical structures in dependence of the measured differences between actual optical properties and target optical properties. It is even conceivable that the second printing ink differs from the first printing ink in at least one physical parameter, wherein the physical parameters preferably comprise curing time, curing temperature, curing wavelength, viscosity, transmittance and/or optical transparency. It is herewith advantageously possible to print certain portions of the optical structure providing certain optical effects compared to other portions of the optical structure, depending on the measured deviations of the actual optical properties of the pre-structure from the target optical properties of the pre-structure, e.g. by printing the certain portions with printing ink which provides a certain optical transparency.

Another object of the present invention is a method for printing a three-dimensional optical component, wherein the optical component is built up successively by depositing droplets of printing ink side by side and one above the other by means of a print head in several consecutive depositing steps, wherein after at least one depositing step, optical properties of a pre-structure of the optical component built up by the deposited droplets are measured by a measuring unit in a measurement step, wherein during the measurement step the optical properties of the pre-structure are being measured by measuring the properties of light wherein the light has been emitted from at least one light source and wherein the light has passed through and/or has been reflected from the pre-structure before its properties are being measured by at least one detector and wherein difference between the measured optical properties and the target optical properties is determined in a process control step.

It is herewith advantageously possible that the optical properties of the imprinted droplets or of a layer of multiple imprinted droplets are verified during the printing process, preferably in real-time. In this way, a correction of the pre-structure can be performed in further printing steps when deviations from the target properties have been measured, for instance.

According to a preferred embodiment of the present invention, the at least one optical property is measured in real-time measurements. That means that measurement of the at least one optical property is being performed before and/or during at least one further droplet of printing ink is deposited.

Preferably, the depositing of the at least one further droplet is performed depending on the measured optical properties in order to achieve the target optical properties of the printed optical structure. Preferably, the density variations of the at least one deposited droplet and/or the density variations of the pre-structure are being measured.

Alternatively, the optical behavior of the pre-structure is being measured. In a preferred embodiment of the present invention, an illuminated image, e.g. an illuminated screen on which an image has been printed, emits light towards the pre-structure. The light from the illuminated image is being recorded on a detector after having passed the pre-structure. From a comparison of the illuminated image with the image recorded on the detector, the optical properties of the pre-structure can be inferred. It is conceivable that the image recorded on the detector is compared to a target image wherein the target image is the image that would theoretically be recorded on the detector if a pre-structure with the target optical properties was placed at the location of the pre-structure in the same measurement. The difference between target image and the actual image recorded on the detector is a measure for the difference of the actual optical properties from the target optical properties of the pre-structure.

In a preferred embodiment of the present invention, the light emitted from the at least one light source can be collimated or widened through at least one optical element before and/or after having been in contact with the pre-structure. It is further conceivable that the light emitted from the at least one light source can be reflected and/or deflected through at least one optical element before and/or after having been in contact with the pre-structure. Optical elements that may be used for this purpose comprise, but are not limited to, mirrors and optical lenses.

The optical structure to be printed has predefined optical properties. During the printing process, the optical structure is being built up successively by depositing droplets of printing ink side by side and one above the other in several consecutive steps. The optical properties of the pre-structure of the optical component built up by the deposited droplets are determined by the predefined optical properties the final component should have. In this way, the predefined optical properties of the final optical structure determine target optical properties for every pre-structure being built up during the printing process. It is conceivable that the target optical properties of the pre-structure are being calculated from the predefined optical properties for each process control step taking into account the measurement results of the preceding measurement steps.

According to another preferred embodiment of the present invention, during the measurement step the optical properties of the pre-structure are preferably being measured through a shadowgraph and the measured optical properties are recorded by the measurement unit as an actual shadowgram of the pre-structure.

In a preferred embodiment of the present invention, the light emitted from the at least one light source passes through the pre-structure and subsequently falls on a detector wherein the detector is preferably an imaging screen. The light emitted from the at least one light source alters its properties through the contact with the pre-structure. E.g. the pre-structure alters the path of at least one light ray emitted from the light source. If there was no obstruction in the path of the emitted light, the imaging screen would show a homogeneous, even luminance or brightness. Through the insertion of the pre-structure into the path of the emitted light between the light source and the imaging screen, the properties of the emitted light change and, consequently, the luminance on the imaging screen is not necessarily homogeneous. Depending on the optical properties of the pre-structure, regions of higher luminance and regions of lower luminance are visible on the screen. The optical properties of the pre-structure are thus encoded in the luminance pattern on the imaging screen. A record of the luminance pattern on the imaging screen is referred to as a shadowgram. The shadowgram can be directly recorded by the imaging screen itself, or, in an alternative embodiment of the preferred invention, the shadowgram can be recorded by a camera that photographs the luminance on the imaging screen. The photograph can preferably be taken from the same side of the imaging screen as the pre-structure. Alternatively, the imaging screen can be realized as a trans-lucent screen and the photograph be taken from behind the imaging screen, i.e. from the side of the imaging screen opposite the pre-structure. It is conceivable that at least a first camera and a second camera are being used in the recording of the shadowgram wherein the first camera preferably takes a photograph of the imaging screen at a first angle to the imaging screen and the second camera preferably takes a photograph of the imaging screen at a second angle to the imaging screen.

It is conceivable that the light emitted from the at least one light source passes an optical element, then passes the pre-structure and subsequently falls on the imaging screen. In a preferred embodiment of the present invention, the optical element is an optical lens that preferably collimates the light.

According to another preferred embodiment of the present invention, target optical properties of the pre-structure are encoded in a target shadowgram and during the process control step the difference between the target optical properties and the measured optical properties is being determined as the difference between the target shadowgram and the actual shadowgram.

In the sense of the present invention, a target shadowgram is the shadowgram that would be recorded in a hypothetical shadowgraph measurement which is set up in exactly the same way as the actual measurement carried out in the measurement step with the sole difference that the pre-structure with its actual optical properties is being replaced by a hypothetical pre-structure with the target optical properties.

The difference between the actual shadowgram and the target shadowgram is preferably being determined by pointwise subtracting the luminance of the actual shadowgram and the luminance of the corresponding point in the target shadowgram from each other.

The difference between the actual shadowgram and the target shadowgram is being determined during the process control step. The process control step can be carried out after each measurement step or after every other, e.g. after every second or after every third step.

It is also conceivable that the difference between the actual shadowgram and the target shadowgram is determined up to a specified threshold. If the determined difference between the actual shadowgram and the target shadowgram is below the specified threshold, it is set to zero in all further procedures. It is herewith advantageously possible to adjust the sensitivity of the comparison of the actual optical properties with the target optical properties. Preferably, the threshold can be set for each process control step. In another preferred embodiment of the present invention, the threshold is set automatically depending on the measurement accuracy of the shadowgraph.

According to another preferred embodiment of the present invention, during the measurement step the optical properties of the pre-structure are preferably being measured through a schlieren measurement and the measured optical properties are recorded by the measurement unit as an actual schlieren image of the pre-structure.

In a preferred embodiment of the present invention, the light emitted from the at least one light source passes the schlieren head, subsequently passes through the pre-structure, subsequently passes through the focal plane of the schlieren head and subsequently falls on a detector preferably embodied as an imaging screen. In the focal plane, a shielding screen at least partially blocks part of the light emanating from the pre-structure. In an alternative embodiment of the present invention, the light emitted from the at least one light source passes at least one second optical element after passing the focal plane and before falling on the imaging screen.

Depending on the optical properties of the pre-structure, regions of higher luminance and regions of lower luminance are visible on the imaging screen. The optical properties of the pre-structure are thus encoded in the luminance pattern on the imaging screen. A record of the luminance pattern on the imaging screen is referred to as a schlieren image. The schlieren image can be directly recorded by the imaging screen itself, or, in an alternative embodiment of the preferred invention, the schlieren image can be recorded by a camera that photographs the luminance on the imaging screen. The photograph can preferably be taken from the same side of the imaging screen as the pre-structure. Alternatively, the imaging screen can be realized as a trans-lucent screen and the photograph be taken from behind the imaging screen, i.e. from the side of the imaging screen opposite of the pre-structure. It is conceivable that at least a first camera and a second camera are being used in the recording of the schlieren image wherein the first camera preferably takes a photograph of the imaging screen at a first angle to the imaging screen and the second camera preferably takes a photograph of the imaging screen at a second angle to the imaging screen.

According to another preferred embodiment of the present invention, target optical properties of the pre-structure are encoded in a target schlieren image and during the process control step the difference between the target optical properties and the measured optical properties is being determined as the difference between the target schlieren image and the actual schlieren image.

In the sense of the present invention, a target schlieren image is the schlieren image that would be recorded in a hypothetical schlieren measurement which is set up in exactly the same way as the actual measurement carried out in the measurement step with the sole difference that the pre-structure with its actual optical properties is being replaced by a hypothetical pre-structure with the target optical properties.

The difference between the actual schlieren image and the target schlieren image is preferably being determined by pointwise subtracting the luminance of the actual schlieren image and the luminance of the corresponding point in the target schlieren image from each other.

The difference between the actual schlieren image and the target schlieren image is being determined during the process control step. The process control step can be carried out after each measurement step or after every other, e.g. after every second or after every third measurement step.

It is also conceivable that the difference between the actual schlieren image and the target schlieren image is determined up to a specified threshold. If the determined difference between the actual schlieren image and the target schlieren image is below the specified threshold, it is set to zero in all further procedures. It is herewith advantageously possible to adjust the sensitivity of the comparison of the actual optical properties with the target optical properties. Preferably, the threshold can be set for each process control step. In another preferred embodiment of the present invention, the threshold is set automatically depending on the measurement accuracy of the schlieren measurement.

According to another preferred embodiment of the present invention, target optical properties of the pre-structure are encoded in a target intensity image which preferably is a projection of the three-dimensional pre-structure on a two-dimensional plane where the height of the pre-structure are encoded in the intensity of the image pixels. According to another preferred embodiment of the present invention, the optical properties of the pre-structure measured by the measurement unit during the measurement step are translated into an actual intensity image. According to another preferred embodiment of the present invention, during the process control step the difference between the target optical properties and the measured optical properties is being determined as the difference between the target intensity image and the actual intensity image.

The difference between the actual intensity image and the target intensity image is preferably being determined by pointwise subtracting the intensity of the actual intensity image and the luminance of the corresponding point in the target intensity image from each other.

The difference between the actual intensity image and the target intensity image is being determined during the process control step. The process control step can be carried out after each measurement step or after every other, e.g. after every second or after every third step.

It is also conceivable that the difference between the actual intensity image and the target intensity image is determined up to a specified threshold. If the determined difference between the actual intensity image and the target intensity image below the specified threshold, it is set to zero in all further procedures. It is herewith advantageously possible to adjust the sensitivity of the comparison of the actual optical properties with the target optical properties. Preferably, the threshold can be set for each process control step. In another preferred embodiment of the present invention, the threshold is set automatically depending on the measurement accuracy of the measurement step.

According to a preferred embodiment of the present invention, during the process control step the configuration of the print head is adapted depending on the difference between the target optical properties and the measured optical properties of the pre-structure.

In particular, the following printing steps are optimized depending on the difference between the target optical properties and the measured, actual optical properties in order to achieve a target optical behavior of the printed optical structure. Preferably, further steps of depositing droplets of printing ink on the substrate are performed depending on the measured optical properties. For example, the printing time, the kind of printing ink, the ejection properties of the droplet, the position of the deposited droplet on the substrate, the quantity of ejected printing ink, the sizes of the droplets, the number of further droplets, are determined depending on the measure optical properties. It is also calculated where on the substrate further droplets have to be deposited in order to optimize the shape of the optical structure, for instance. Furthermore, e.g. the required printing speed, curing time and/or orientation of the print head is determined. It is conceivable that also the kind of printing ink is selected if different printing inks are available. In particular, the steps of depositing droplets of printing ink and measuring the optical properties are repeated iteratively until a satisfactory optical structure is achieved. Preferably, the at least one deposited droplet is cured by using UV light emitted from at least one UV light source, wherein the steps of ejecting the at least one droplet, measuring the optical properties and curing the at least one deposited droplet are repeated one or more times in order to generate an optimized optical structure.

According to an alternative preferred embodiment of the present invention, during the process control step the configuration of the print head is adapted depending on the measured optical properties of the pre-structure.

In a preferred embodiment of the present invention, the inverse of the actual shadowgram is being used as to control the print head in at least one of the following printing steps. In the sense of the present invention, the inverse of the actual shadowgram is the grayscale image obtained from inverting each pixel of the actual shadowgram such that the lightest pixels on the actual shadowgram become the darkest pixels on the inverted shadowgram. In particular, the intensity of each pixel of the inverted shadowgram is determined by the difference between a maximal intensity and the intensity of the corresponding pixel in the actual shadowgram. In a preferred embodiment of the present invention, the inverted actual shadowgram advantageously provides a grayscale image to control the print head in at least one of the following printing steps in such a way that irregularities in the pre-structure are being compensated for during the at least one of the following printing steps.

In a preferred embodiment of the present invention, the inverse of the actual schlieren image is being used as to control the print head in at least one of the following printing steps. In the sense of the present invention, the inverse of the actual schlieren image is the grayscale image obtained from inverting each pixel of the actual schlieren image such that the lightest pixels on the actual schlieren image become the darkest pixels on the inverted schlieren image. In particular, the intensity of each pixel of the inverted schlieren image is determined by the difference between a maximal intensity and the intensity of the corresponding pixel in the actual schlieren image. In a preferred embodiment of the present invention, the inverted actual schlieren image advantageously provides a grayscale image to control the print head in at least one of the following printing steps in such a way that irregularities in the pre-structure are being compensated for during the at least one of the following printing steps.

According to another preferred embodiment of the present invention, a support structure which is preferably permeable for visible light is printed on a substrate on top of which the optical component is printed during a preparation step.

The support structure is printed on the substrate before the printing of the optical structure is carried out during a preparatory step. It is conceivable that the support structure is printed using printing ink differing from the printing ink used for the printing of the optical structure in at least one physical parameter, wherein the physical parameters preferably comprise curing time, curing temperature, curing wavelength, viscosity, color, transmittance and/or optical transparency. Preferably, the printing ink is permeable for visible light. It is herewith advantageously possible to carry out measurements of optical properties based on the measurement of the optical properties of light that has been in contact with the pre-structure. Furthermore, it is conceivable that the printing ink from which the support structure is printed is soluble by a solvent. It is herewith advantageously possible to remove the support structure from the substrate through application of a solvent after the printing process is completed and the printed optical structure has been removed from the printing system. During the printing step, the droplets are deposited side by side one above the other in several consecutive steps on the support structure. The layers formed by the deposited droplets on the support structure inherit their shape from the shape of the surface of the support structure on which the droplets are deposited. It is herewith advantageously possible to print optical structures with a predefined shape of at least one side of the optical structure in a very efficient and time-saving way.

### BRIEF DESCRIPTION OF THE DRAWINGS

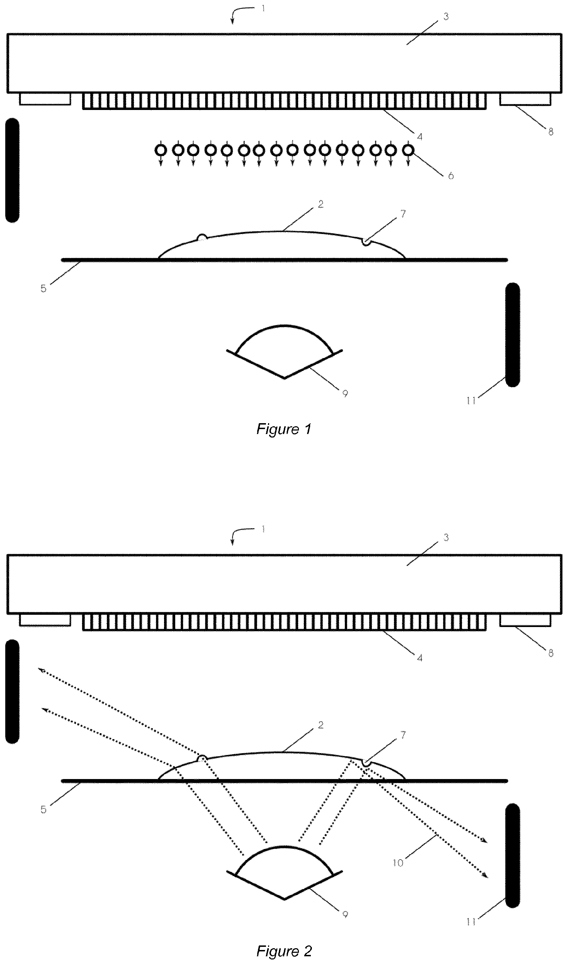

**Figure 1** illustrates schematically a printing system and a method for printing a three-dimensional structure, in particular an optical component, by depositing droplets of printing ink side by side and one above the other in several consecutive depositing steps by means of a print head according to an exemplary embodiment of the present invention.
**Figure 2** illustrates schematically a measurement unit and a method for measuring the optical properties of the printed pre-structure by measuring visible light that has either passed through or that has been reflected from the pre-structure with the help of a detector system and a method for printing an optical three-dimensional structure according to an exemplary embodiment of the present invention.

### DETAILED DESCRIPTION

The present invention will be described with respect to particular embodiments and with target to certain drawings but the invention is not limited thereto but only by the claims. The drawings described are only schematic and are non-limiting. In the drawings, the size of some of the elements may be exaggerated and for illustrative purposes may not be drawn to scale.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In **figure 1****,** a method and a printing system 1 for printing a three-dimensional structure 2 are schematically illustrated. In the present example, the three-dimensional structure 2 comprises an optical component and in particular an ophthalmic lens.

The printing system 1 comprises a print head 3 equipped with a plurality of ejection nozzles 4. The ejection nozzles 4 are arranged in parallel on the lower side of the print head 3. Each ejection nozzle 4 is in fluid connection with a reservoir of printing ink (not shown) and comprises piezoelectric crystals to eject a droplet 6 of printing ink from the print head towards a substrate 5. The printing system 1 can therefore also be referred to as DOD (droplets-on-demand) inkjet printer. In each depositing step 14, a volley of several droplets 6 are ejected in parallel and simultaneously towards the substrate 5, so that a layer of deposited droplets 6 arranged side by side onto the substrate 5 is generated. With each following depositing step 14, a further layer of deposited droplets 6 are provided onto the former layer of deposited droplets 6.

After deposition of the droplets 6, adjacent deposited droplets 6 merge at least partially which each other (the deposited droplets 6 are therefore not illustrated) and are subsequently cured in a curing step 17 by UV-light emitted by LED's (light emitting diodes) 9 of the print head 3. The printing ink comprises a transparent or trans-lucent printing ink, preferably an UV curable liquid monomer becoming a polymer if being cured. The depositing steps 14 and the curing steps 17 are repeated subsequently until a desired three-dimensional structure 2 is built up.

In order to deposit droplets 6 in certain positions onto the substrate 5, the ejection nozzles 4 are individually controllable by a printing controller of the printing system 1. The horizontal extension of the print head 1 is substantially greater than the horizontal extension of the three-dimensional structure 2 to be printed, so that a movement of the print head 3 relative to the substrate 5 is not necessary to build up the three-dimensional structure 2 in the present example. The print head 3 typically comprises around 100 to 5.000 ejection nozzles 4 arranged in parallel. The print head 3 and the substrate 5 are movable relative to each other. In the present example, movement of the print head 3 relative to the substrate 5 is obtained either by actively driving the print head 3 or by actively driving the substrate 5 respectively by corresponding drive units (not shown).

The print head 3 and in particular the individual ejection nozzles 4 are controlled by the printing controller in dependency of an intensity image (not shown). The intensity image comprises a two-dimensional pattern of different greyscale intensities. The pattern consists of different pixels, wherein each pixel represents a certain position in the three-dimensional structure 2 to be printed. In particular, each pixel represents a certain position of a two-dimensional projection of the three-dimensional structure 2 onto the substrate 5. The intensity in each pixel of the intensity image represents the height of the three-dimensional structure 2 at the corresponding position and therefore the number of droplets 6 to be deposited in this position by the corresponding ejection nozzles 4 in subsequent depositing steps 14. The printing controller now controls each of the plurality of printing nozzles 4 in such a manner that the number of droplets 6 deposited in each position on the substrate 5 corresponds to the intensity of the intensity image after all depositing steps 14 have been subsequently performed. The three-dimensional structure 2 is thereby built up step by step until the amount of printing material deposited in each position corresponds to the intensity of the pixels of the intensity image. In this manner, the droplets 6 are deposited side by side and one above the other in order to generate the desired three-dimensional structure 2. As mentioned above, curing steps 17 are performed optionally between two subsequent depositing steps 14 in order to partially cure the deposited droplets 6 and to avoid that the deposited droplets 6 completely deliquesce after deposition.

In practice, the ejection characteristics of the ejection nozzles 4 are affected by clogging of printing ink and contamination with e.g. foreign particles and impurities. For this reasons, it happens from time to time that one or few ejection nozzles 4 of the print head 3 eject(s) less amount of printing ink with each droplet 6 in each depositing step 14 or that the ejection direction of the droplet 6 to be deposited is affected. Ejection nozzles 4 with a suchlike ejection characteristic are hereinafter referred to as malfunctioning ejection nozzles 4'. Furthermore, it can happen that a certain ejection nozzle 4 ejects more printing ink with each droplet 6 than usual. These ejection nozzles 4 are also hereinafter referred to as malfunctioning ejection nozzles 4'. All other ejection nozzles 4 being not clogged and working properly are hereinafter referred to as properly functioning ejection nozzles 4". As malfunctioning ejection nozzles 4' sometimes open up again (declogging) and properly functioning ejection nozzles 4" get clogged due to unpredictable circumstances, the locations of the malfunctioning ejection nozzles 4' inside the print head 3 changes and cannot be determined or considered upfront before putting the printing system 1 into operation.

The resulting deviations of the ejection characteristics between malfunctioning ejection nozzles 4' and properly functioning ejection nozzles 4" in the same print head 3 lead to imperfections 7 in the printed three-dimensional structure 2. Examples for imperfections are depressions, indentations and entrapments of air, wherein the depressions, indentations and entrapments are not part of the design of the optical structure. These imperfections sum up with each layer of deposited droplets 6. Usually, these imperfections are so small that no visible and disturbing influences occur. However, in the present example, the three-dimensional structure 2 comprises an ophthalmic lens, wherein even the finest small imperfections lead to serious optical defects disturbing the optical beam path when using the ophthalmic lens. In particular, these imperfections generate unwanted diffractive phenomena.

In order to avoid these imperfections in the printed three-dimensional structure 2, although the print head 3 comprises malfunctioning ejection nozzles 4' as well as properly functioning ejection nozzles 4", the printing system 1 is provided with a measuring unit 16. In the present example, the measurement unit comprises a light source 9 located below the substrate 5 and two detectors 11 wherein one detector is located above the substrate 5 and one detector is located below the substrate 5. The measurement unit measures optical properties of a pre-structure 2' being built up by droplets 6 deposited in one or more previous depositing steps 14. This measuring step 15 is performed after each depositing step 14 or after at least a predefined number of depositing steps 14.

In **figure 2****,** a measurement unit and a method for measuring the optical properties of a pre-structure 2' being build up during the printing process of a three-dimensional optical structure 2 are schematically illustrated. In the present example, the measurement unit comprises one light source 9 and two detectors 11.

The measurement unit is preferably configured to measure the optical properties of the pre-structure by measuring the optical properties of light 8 emitted by the light source 9 after having passed through the substrate 5 and pre-structure 2' on a detector 11 placed above the substrate 5 and pre-structure 2' and by measuring the optical properties of light 8 emitted by the light source 9 after having been reflected from the substrate 5 and pre-structure 2' on a detector 11 placed below the substrate 5 and pre-structure 2'.

The measured optical property data are provided by the measurement unit to a process control unit (not shown). The processing unit compared the actual, measured optical properties of the pre-structure with the target optical properties in a process control step 16. The target optical properties are e.g. stored in the process control unit and encode the information on how the optical properties of the pre-structure should theoretically be if all ejected nozzles worked perfectly well and properly and no other irregularities during the printing process occurred. In this way, deviations between the actual optical properties and the target optical properties can be identified and used to initialize compensation measures in at least one of the following depositing steps 14 or in at least one of the following curing steps 17.

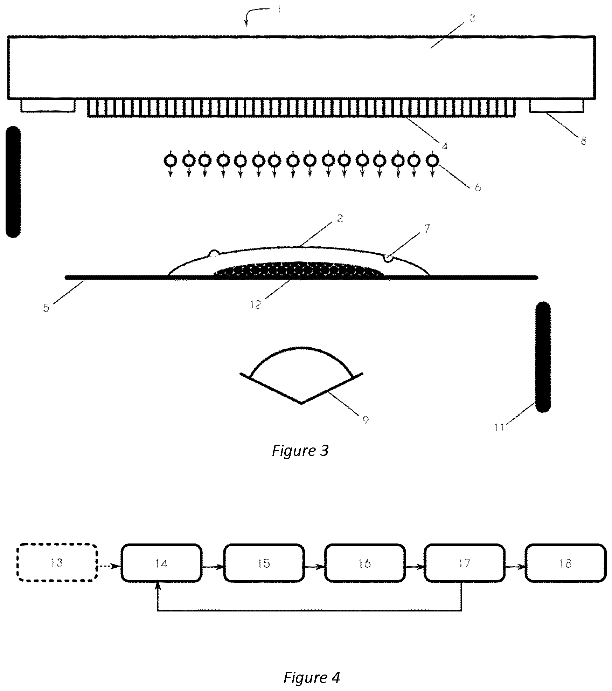

In **figure 3****,** a method and a printing system 1 for printing a three-dimensional structure 2 on top of a support structure 12 are schematically illustrated. In the present example, the three-dimensional structure 2 comprises an optical component and in particular an ophthalmic lens.

The support structure 12 is printed on the substrate 5 in a preparation step 13 wherein the support structure 12 is built up successively by depositing droplets of a second printing ink side by side and one above the other by means of a print head 3 in several consecutive printing steps. The droplets at least partially merge. The droplets are cured using at least one UV light 8 after at least one printing step. If the support structure has reached the desired shape, it is finally hardened in a final curing step. The finally hardened support structure is the end product of the preparation step 13. After the preparation step, the printing process of the three-dimensional optical structure is carried out. The three-dimensional optical structure is built up successively by depositing droplets 6 of printing ink side by side and one above the other by means of a print head 3 on the support structure. The surface of three-dimensional optical structure built up in this way in several consecutive depositing steps that faces the support structure inherits its shape from the support structure.

In **figure 4****,** different steps of the method according to the exemplary embodiment of the present invention are shown. As described above, the method comprises an optional preparation step 13 during which a support structure 12 is printed on the substrate 5, followed by a depositing step 14 of ejecting a plurality of droplets 6 simultaneously and in parallel towards the substrate 5 and/or support structure 12, followed by a measurement step 15 during which the optical properties of the pre-structure 2' built up in the preceding depositing steps 14 are being measured, followed by a process control step 16 during which the difference between the measured optical properties of the pre-structure 2' and target optical properties of the pre-structure 2' is being determined, followed by a curing step 17 during which the deposited droplets are at least partially cured using UV light 8. If the difference between the measured optical properties of the pre-structure 2' and the target optical properties of the pre-structure 2' is above a specified threshold, the print head 3 is adapted depending on the difference between the measured optical properties of the pre-structure 2' and the target optical properties of the pre-structure 2' such that the deviations of the measured optical properties of the pre-structure 2' from the target optical properties of the pre-structure 2' can be compensated in the following depositing step 14. Steps 14 - 17 are repeated until the difference between the measured optical properties of the pre-structure 2' and the target optical properties of the pre-structure 2' is below the specified threshold in which case final curing is carried out during the final curing step 18.

### KEY TO FIGURES

- 1: Printing System
- 2: Three-dimensional optical structure
- 3: Print Head
- 4: Ejection Nozzle
- 5: Substrate
- 6: Droplet
- 7: Imperfection
- 8: UV light
- 9: Light Source
- 10: Light
- 11: Detector
- 12: Support Structure
- 13: Preparation Step
- 14: Depositing Step
- 15: Measurement Step
- 16: Process Control Step
- 17: Curing Step
- 18: Final Curing Step

## Claims

1. Printing system for printing a three-dimensional optical component (2), comprising a printing unit comprising a print head (3) with ejection nozzles (4) for ejecting droplets (6) of printing ink, comprising a measurement unit to measure optical properties of a pre-structure (2') of the three-dimensional optical component (2) **characterized in that** the measurement unit comprises at least one light source and at least one light detector, further comprising a process control unit for determining the difference between the measured optical properties of the pre-structure and target optical properties of the pre-structure, wherein the measurement accuracy of the measurement unit is adjustable, **characterised in that** the measurement unit is a schlieren measurement unit and the measured optical properties of the pre-structure (2') are recorded as an actual schlieren image, wherein the schlieren measurement unit comprises at least one light source (9), at least one imaging screen, at least a first optical element and a second optical element and further comprises a knife edge, wherein the distance between pre-structure (2') and the knife edge can be varied to vary the sensitivity of the schlieren measurement.

2. Printing system according to claim 1, wherein the printing system comprises at least one UV-light source (8) that emits UV light of differing intensity and/or with differing exposure time and/or wavelength at at least two different points on the pre-structure (2') resulting in a spatially varying exposure of the pre-structure (2') to UV light.

3. Method for printing a three-dimensional optical component (2) with a printing system according to one of the claims 1 to 2, wherein the optical component (2) is built up successively by depositing droplets (6) of printing ink side by side and one above the other by means of a print head (3) in several consecutive depositing steps (14), wherein after at least one depositing step (14'), optical properties of a pre-structure (2') of the optical component (2) built up by the deposited droplets (6) are measured by a measuring unit in a measurement step (15), wherein during the measurement step (15) the optical properties of the pre-structure (2') are being measured by measuring the properties of light (10) wherein the light (10) has been emitted from at least one light source (9) and wherein the light (10) has passed through and/or has been reflected from the pre-structure (2') before its properties are being measured by at least one detector (11) and wherein difference between the measured optical properties and the target optical properties is determined in a process control step (16), **characterised in that** during the measurement step (15) the optical properties of the pre-structure (2') are being measured through a schlieren measurement and the measured optical properties are recorded by the measurement unit as an actual schlieren image of the pre-structure (2'), wherein the measurement accuracy of the measurement unit is adjusted.

4. Method according to claim 3, wherein target optical properties of the pre-structure (2') are encoded in a target schlieren image and wherein during the process control step (16) the difference between the target optical properties and the measured optical properties is being determined as the difference between the target schlieren image and the actual schlieren image.

5. Method according to one of the claims 3 to 4, wherein target optical properties of the pre-structure (2') are encoded in a target intensity image which preferably is a projection of the three-dimensional pre-structure (2') on a two-dimensional plane where the height of the pre-structure (2') are encoded in the intensity of the image pixels.

6. Method according to one of the claims 3 to 4, wherein the optical properties of the pre-structure (2') measured by the measurement unit during the measurement step (15) are translated into an actual intensity image.

7. Method according to one of the claims 3 to 6, wherein during the process control step (16) the difference between the target optical properties and the measured optical properties is being determined as the difference between the target intensity image and the actual intensity image.

8. Method according to one of the claims 3 to 7, wherein during the process control step (16) the configuration of the print head (3) is adapted depending on the difference between the target optical properties and the measured optical properties of the pre-structure (2').

9. Method according to claims 3 to 8, wherein during the process control step (16) the configuration of the print head (3) is adapted depending on the measured optical properties of the pre-structure (2').

10. Method according to one of the claims 3 to 9, wherein during a preparation step (13) a support structure (12) which is preferably permeable for visible light is printed on a substrate (5) on top of which the optical component (2) is printed.

## Patentansprüche

1. Drucksystem zum Drucken einer dreidimensionalen optischen Komponente (2), eine Druckeinheit umfassend, die einen Druckkopf (3) mit Ausstoßdüsen (4) zum Ausstoßen von Tröpfchen (6) von Drucktinte umfasst, eine Messeinheit zum Messen optischer Eigenschaften einer Vorstruktur (2') der dreidimensionalen optischen Komponente (2) umfassend, **dadurch gekennzeichnet, dass** die Messeinheit mindestens eine Lichtquelle und mindestens einen Lichtdetektor umfasst, weiterhin umfassend eine Prozesssteuerungseinheit zum Bestimmen der Differenz zwischen den gemessenen optischen Eigenschaften der Vorstruktur und optischen Zieleigenschaften der Vorstruktur, wobei die Messgenauigkeit der Messeinheit eingestellbar ist, **dadurch gekennzeichnet, dass** die Messeinheit eine Schlierenmesseinheit ist und die gemessenen optischen Eigenschaften der Vorstruktur (2') als ein tatsächliches Schlierenbild aufgezeichnet werden, wobei die Schlierenmesseinheit mindestens eine Lichtquelle (9), mindestens einen Abbildungsschirm, mindestens ein erstes optisches Element und ein zweites optisches Element umfasst und weiterhin eine Messerschneide umfasst, wobei die Entfernung zwischen Vorstruktur (2') und der Messerschneide variiert werden kann, um die Empfindlichkeit der Schlierenmessung zu variieren.

2. Drucksystem nach Anspruch 1, wobei das Drucksystem mindestens eine UV-Lichtquelle (8) umfasst, die UV-Licht von verschiedener Intensität und/oder mit verschiedener Belichtungszeit und/oder Wellenlänge auf mindestens zwei verschiedene Punkte auf der Vorstruktur (2') emittiert, was zu einer räumlich variierenden Belichtung der Vorstruktur (2') mit UV-Licht führt.

3. Verfahren zum Drucken einer dreidimensionalen optischen Komponente (2) mit einem Drucksystem nach einem der Ansprüche 1 bis 2, wobei die optische Komponente (2) nach und nach durch Ablagern von Tröpfchen (6) von Drucktinte Seite an Seite und eines über dem anderen mittels eines Druckkopfs (3) in mehreren aufeinanderfolgenden Ablagerungsschritten (14) aufgebaut wird, wobei nach mindestens einem Ablagerungsschritt (14') optische Eigenschaften einer Vorstruktur (2') der optischen Komponente (2), die durch die abgelagerten Tröpfchen (6) aufgebaut wurde, durch eine Messeinheit in einem Messungsschritt (15) gemessen werden, wobei während des Messungsschritts (15) die optischen Eigenschaften der Vorstruktur (2') durch Messen der Eigenschaften von Licht (10) gemessen werden, wobei das Licht (10) aus mindestens einer Lichtquelle (9) emittiert wurde und wobei das Licht (10) durch die Vorstruktur (2') durchgegangen ist und/oder von dieser reflektiert wurde, bevor ihre Eigenschaften durch mindestens einen Detektor (11) gemessen werden, und wobei eine Differenz zwischen den gemessenen optischen Eigenschaften und den optischen Zieleigenschaften in einem Prozesssteuerungsschritt (16) bestimmt wird, **dadurch gekennzeichnet, dass** während des Messungsschritts (15) die optische Eigenschaften der Vorstruktur (2') durch eine Schlierenmessung gemessen werden und die gemessenen optischen Eigenschaften durch die Messeinheit als ein tatsächliches Schlierenbild der Vorstruktur (2') aufgezeichnet werden, wobei die Messgenauigkeit der Messeinheit eingestellt ist.

4. Verfahren nach Anspruch 3, wobei optische Zieleigenschaften der Vorstruktur (2') in einem Zielschlierenbild codiert sind und wobei während des Prozesssteuerungsschritts (16) die Differenz zwischen den optischen Zieleigenschaften und den gemessenen optischen Eigenschaften als die Differenz zwischen dem Zielschlierenbild und dem tatsächlichen Schlierenbild bestimmt wird.

5. Verfahren nach einem der Ansprüche 3 bis 4, wobei optische Zieleigenschaften der Vorstruktur (2') in einem Zielintensitätsbild codiert sind, das vorzugsweise eine Projektion der dreidimensionalen Vorstruktur (2') auf eine zweidimensionale Ebene ist, wobei die Höhe der Vorstruktur (2') in der Intensität der Bildpixel codiert ist.

6. Verfahren nach einem der Ansprüche 3 bis 4, wobei die optischen Eigenschaften der Vorstruktur (2'), die durch die Messeinheit während des Messungsschritts (15) gemessen wurden, in ein tatsächliches Intensitätsbild übersetzt werden.

7. Verfahren nach einem der Ansprüche 3 bis 6, wobei während des Prozesssteuerungsschritts (16) die Differenz zwischen den optischen Zieleigenschaften und den gemessenen optischen Eigenschaften als die Differenz zwischen dem Zielintensitätsbild und dem tatsächlichen Intensitätsbild bestimmt wird.

8. Verfahren nach einem der Ansprüche 3 bis 7, wobei während des Prozesssteuerungsschritts (16) die Konfiguration des Druckkopfs (3) in Abhängigkeit von der Differenz zwischen den optischen Zieleigenschaften und den gemessenen optischen Eigenschaften der Vorstruktur (2') angepasst wird.

9. Verfahren nach den Ansprüchen 3 bis 8, wobei während des Prozesssteuerungsschritts (16) die Konfiguration des Druckkopfs (3) in Abhängigkeit von den gemessenen optischen Eigenschaften der Vorstruktur (2') angepasst wird.

10. Verfahren nach einem der Ansprüche 3 bis 9, wobei während eines Vorbereitungsschritts (13) eine Tragestruktur (12), die vorzugsweise durchlässig für sichtbares Licht ist, auf einem Substrat (5) gedruckt wird, auf dem die optische Komponente (2) gedruckt wird.

## Revendications

1. Système d'impression destiné à imprimer un composant optique tridimensionnel (2), comprenant une unité d'impression comprenant une tête d'impression (3) avec des buses d'éjection (4) pour éjecter des gouttelettes (6) d'encre d'impression, comprenant une unité de mesure pour mesurer des propriétés optiques d'une préstructure (2') du composant optique tridimensionnel (2), **caractérisé en ce que** l'unité de mesure comprend au moins une source de lumière et au moins un détecteur de lumière, comprenant en outre une unité de contrôle de processus pour déterminer la différence entre les propriétés optiques mesurées de la préstructure et des propriétés optiques cibles de la préstructure, la précision de mesure de l'unité de mesure étant réglable, **caractérisé en ce que** l'unité de mesure est une unité de mesure strioscopique et les propriétés optiques mesurées de la préstructure (2') sont enregistrées sous la forme d'une image strioscopique réelle, l'unité de mesure strioscopique comprenant au moins une source de lumière (9), au moins un écran d'imagerie, au moins un premier élément optique et un deuxième élément optique, et comprenant en outre une lame de couteau, la distance entre la préstructure (2') et la lame de couteau pouvant être modifiée pour faire varier la sensibilité de la mesure strioscopique.

2. Système d'impression selon la revendication 1, le système d'impression comprenant au moins une source de rayonnement UV (8) qui émet un rayonnement UV d'intensité variable et/ou avec un temps d'exposition et/ou une longueur d'onde variables à au moins deux points différents sur la préstructure (2'), se traduisant par une exposition variant spatialement de la préstructure (2') au rayonnement UV.

3. Procédé destiné à imprimer un composant optique tridimensionnel (2) avec un système d'impression selon une des revendications 1 à 2, dans lequel le composant optique (2) est construit successivement par dépôt de gouttelettes (6) d'encre d'impression côte à côte et les unes au-dessus des autres au moyen d'une tête d'impression (3) dans plusieurs étapes de dépôt consécutives (14), dans lequel, après au moins une étape de dépôt (14'), des propriétés optiques d'une préstructure (2') du composant optique (2) construit par les gouttelettes déposées (6) sont mesurées par une unité de mesure dans une étape de mesure (15), dans lequel, pendant l'étape de mesure (15), les propriétés optiques de la préstructure (2') sont mesurées par mesure des propriétés d'une lumière (10), la lumière (10) ayant été émise depuis au moins une source de lumière (9) et la lumière (10) ayant traversé et/ou ayant été réfléchie par la préstructure (2') avant que ses propriétés soient mesurées par au moins un détecteur (11), et dans lequel une différence entre les propriétés optiques mesurées et les propriétés optiques cibles est déterminée dans une étape de contrôle de processus (16), **caractérisé en ce que**, pendant l'étape de mesure (15), les propriétés optiques de la préstructure (2') sont mesurées par une mesure strioscopique et les propriétés optiques mesurées sont enregistrées par l'unité de mesure sous la forme d'une image strioscopique réelle de la préstructure (2'), la précision de mesure de l'unité de mesure étant réglée.

4. Procédé selon la revendication 3, dans lequel des propriétés optiques cibles de la préstructure (2') sont codées dans une image strioscopique cible et dans lequel, pendant l'étape de contrôle de processus (16), la différence entre les propriétés optiques cibles et les propriétés optiques mesurées est déterminée comme la différence entre l'image strioscopique cible et l'image strioscopique réelle.

5. Procédé selon une des revendications 3 à 4, dans lequel des propriétés optiques cibles de la préstructure (2') sont codées dans une image d'intensité cible qui est de préférence une projection de la préstructure tridimensionnelle (2') sur un plan bidimensionnel où la hauteur de la préstructure (2') est codée dans l'intensité des pixels d'image.

6. Procédé selon une des revendications 3 à 4, dans lequel les propriétés optiques de la préstructure (2') mesurées par l'unité de mesure pendant l'étape de mesure (15) sont traduites en une image d'intensité réelle.

7. Procédé selon une des revendications 3 à 6 dans lequel, pendant l'étape de contrôle de processus (16), la différence entre les propriétés optiques cibles et les propriétés optiques mesurées est déterminée comme la différence entre l'image d'intensité cible et l'image d'intensité réelle.

8. Procédé selon une des revendications 3 à 7 dans lequel, pendant l'étape de contrôle de processus (16), la configuration de la tête d'impression (3) est adaptée en fonction de la différence entre les propriétés optiques cibles et les propriétés optiques mesurées de la préstructure (2').

9. Procédé selon les revendications 3 à 8 dans lequel, pendant l'étape de contrôle de processus (16), la configuration de la tête d'impression (3) est adaptée en fonction des propriétés optiques mesurées de la préstructure (2').

10. Procédé selon une des revendications 3 à 9 dans lequel, pendant une étape de préparation (13), une structure de support (12) qui est de préférence perméable à la lumière visible est imprimée sur un substrat (5) au-dessus duquel le composant optique (2) est imprimé.
